# EUROPEAN PATENT SPECIFICATION

(11) **EP 2 820 323 B1**
(45) Date of publication and mention of the grant of the patent: **25.05.2016**
(21) Application number: 13707360.7
(22) Date of filing: 28.02.2013
(51) Int. Cl.: F16F 15/32, F16F 15/34

(54) **CLIP-ON BALANCING WEIGHTS**
AUFSCHLAG-AUSWUCHTGEWICHTE
MASSE D'ÉQUILIBRAGE À PINCE

(30) Priority: 29.02.2012 US 201213408183; 30.08.2012 EP 12182442
(43) Date of publication of application: 07.01.2015
(73) Proprietor: Wegmann Automotive GmbH & Co. KG, 97209 Veitshöchheim (DE)
(72) Inventor: HORNUNG, Thomas, 97072 Würzburg (DE)
(74) Representative: Lohr, Georg
(86) International application number: PCT/EP2013/054079
(87) International publication number: WO 2013/127945

(56) References cited:
- WO-A1-92/00471
- WO-A1-2007/116166
- DE-A1- 2 522 149
- FR-A1- 2 909 150
- GB-A- 1 501 781
- US-A1- 2005 104 438
- US-A1- 2009 243 370

## Description

### Field of the invention

The invention relates to balancing weights and belts of balancing weights and devices for handling and transporting weights used in vehicle balancing applications, in particular for dispensing weights used in balancing automobile or other vehicle wheels.

### Description of the related art

In automotive wheel balancing, individual wheel balancing weights are applied to specific positions of a rim. Basically, two types of balancing weight are used. The first kind is a balancing weight which is attached by a clamp, as disclosed for example in the European patent EP 1 613 876 B1, while the second kind is fixed by means of a self-adhesive tape, as disclosed for example in US patent 6,364,421 B1.

Both kinds of balancing weights are available in a plurality of sizes, resulting in different weights. When balancing a vehicle wheel, the correct size of balancing weight is selected and attached to the rim. Most balancing weights are supplied as bulk material in boxes, from which the required number of weights is manually taken.

This allows for a simple, comparatively cheap supply of balancing weights. The drawback is that the person who is taking the weights from the box may take a wrong weight, and therefore a further step of balancing is required. Furthermore, the process of taking the weights can hardly be automated. Therefore, other solutions as disclosed for example in WO 2008/103651 A1 or WO 2005/049714, using a continuous polymer tape, have been developed. This has the drawback that a solid balancing weight is significantly more robust and reliable than these continuous tapes. Furthermore, the polymer tapes can only be glued to flat surfaces of a rim.

### Summary of the invention

The problem to be solved by the invention is to provide clip-on balancing weights and a belt of balancing weights to improve automated transport and dispension of vehicle balancing weights and to provide a method for automated transport and dispension of vehicle balancing weights.

Solutions of the problem are described in the independent claims. The dependent claims relate to further improvements of the invention.

A first embodiment relates to clip-on balancing weights for vehicle wheels. Such a balancing weight comprises a plurality of balancing weight elements which are interconnected by link elements. Preferably, the link elements have a lower cross section and the balancing weight elements. The balancing weight elements have a surface with a clip lock structure to interface with a spring clip for being attached to a rim of a wheel. The balancing weights interconnected with each other are forming a belt or string like arrangement. Before applying balancing weights a balancing weight having the required weight may be cut off this belt. Preferably cutting is achieved at the position of the link elements, as these can easily be cut due to their lower cross section. Of course, if required a cut may be done through a balancing weight element. If for example, a balancing weight of the size of 3 balancing weight elements is required, 3 balancing weight elements may be cut off from the belt in one contiguous section. In the next step, this balancing weight may be picked and placed by a robot at the rim. After placing the balancing weight to the rim, a clip may be placed on at least one of the balancing weight elements to securely fix the balancing weight to the rim. In this example, preferably a clip is placed on the center balancing weight element. There may be a support layer and/or a self-adhesive tape under the balancing weights, this support layer and/or self-adhesive tape may give sufficient support on the rim to hold the neighbored balancing weights in place. In an embodiment without self-such a support layer and/or adhesive tape, the connection between the balancing weights may be stiff enough to hold the other balancing weights in place. In an alternate embodiment, the both outmost balancing weights would be secured by clips. In this case, the center balancing weight may be held by its neighboring balancing weights and it may be additionally held by the self-adhesive tape. In a preferred embodiment, there would be a securing clip on each of the balancing weights. In this example, there would be three securing clips on all three balancing weights. However, the most preferred embodiment could be one clip. It is to be understood that the embodiments which are shown by the previous example based on three balancing weights may be applied to any other number of balancing weights.
another aspect of the invention relates to a belt for balancing weights and to balancing weights for automated transport. Such balancing weights preferably comprising zinc, steel, plumb or plastic, are attached to a transport tape or belt which may preferably be an adhesive tape for attaching the balancing weights to a rim. In a first embodiment, the balancing weights are individual weights at a distance from each other to allow for bending of the tape at least one axis, preferably at two axes under a right angle. In a further embodiment there are clip-on balancing weights known from the art attached to a tape or belt.

In a further embodiment, the balancing weights are connected by at least one connecting element. Such a connecting element may be, a dove tail, a bolt or a pin or any other kind of coupling. A connecting element preferably is from the same material as the balancing weights. Most preferably the connecting elements may be separated without destruction of the connecting elements. Most preferably the connecting elements can be reconnected after separation. Preferably the balancing weights may also be supported by a tape which also may serve as an adhesive tape. Generally, a tape support of balancing weights connected by a coupling may not be necessary. In a further embodiment the connecting element may comprise a material, preferably a material which is used for covering the surface of the balancing weights. This may be any polymer like epoxy.

In a further embodiment, the balancing weights may be located on at least one tape, preferably a self-adhesive tape. Most preferably, there is at least one top tape layer to which the balancing weights are attached. They may be glued or molded to the tape. Preferably at least one comparatively soft layer is provided which may comprise a foam material to compensate for deviations of the rim surface. Furthermore any of the layers disclosed herein may have at least one adhesive coating to provide a sufficient adhesive strength to a neighboring layer, a balancing weights or the rim.

In a further embodiment, there is at least a second tape layer attached to the first tape layer. Preferably, the second tape layer is a different kind of tape as the first tape layer.

In a further embodiment, there is at least one support layer provided to bear the balancing weights. Preferably, this support layer is a rigid or semi-rigid layer. This layer may be a sheet, foil, or tape of any material, preferably of metal, e.g. aluminum or a reinforced plastic material. Most preferably, this layer comprises a glass fiber or carbon fiber reinforced plastic material. This layer may also comprise a grid or mesh which may also be of metal or plastic, preferably a glass or carbon fiber reinforced plastic. This layer gives the whole assembly of tapes and weights some stiffness and prevents bending when the belt comprising of the tape and the balancing weights is transported from a dispenser and handed over to a robot or a person for being attached to a wheel rim as one piece. The support layer may be used alone or in conjunction with other layers. it is preferred to combine the support layer with an adhesive tape. The support layer may comprise at least one or a combination of a metal plate, a metal sheet, a metal foil, or metal grid, a plastic material, a fiber reinforced plastic material, a glass fiber or carbon fiber reinforced material, aluminum, steel.

According to a further embodiment of the invention, the support layer may be cut together with the other layers of the tape by a dispensing apparatus when dispensing balancing weights. The dispensing apparatus may cut sections containing a required number of balancing weights from an endless belt. If, for example, a total weight which is equal to three balancing weights is required, a dispensing apparatus would cut a section having three balancing weights off the belt. This section is a comparatively solid and stiff unit, although it comprises of three individual balancing weights. Therefore, the section can be handled as one piece.

Preferably, the support layer is embedded within at least two tape layers. This results in additional stiffness. In another embodiment, the support layer may be the top layer beyond the balancing weights. It is preferred, if in this case the support layer is glued, bonded, welded, or soldered to the balancing weights, resulting in a long-lasting reliable connection between the balancing weights and the support layer. The balancing weights according to the various embodiments may be attached to a rim by different methods. Generally, there are two types of balancing weights and related attachment methods known from the prior art. First, there are balancing weights which are glued by a self-adhesive tape to the rim. This type of balancing weights can now be automatically processed as one piece, even if there is a plurality of balancing weights which has to be attached to the rim next to each other. In such a case, for example if a total balancing weight of 15 grams is required and the tape contains balancing weights having 5 grams each, a section with three balancing weights will be cut from the belt. Due to the comparatively stiff connection between the balancing weights by couplings and/or support layer, this section comprising three balancing weights can be handled as one unitary piece, for example by a robot. The section may be automatically picked and placed to the rim in one processing step.

A further aspect of the invention relates to a strand of polymer material with embedded mass material for forming clip-on balancing weights. It is preferred, if the strand has a surface with a clip lock structure to interface with a spring clip as previously disclosed for attaching the strand to the rim of a wheel. it is further preferred, if the strand is attached to a support layer. The support layer may comprise at least one or a combination of a metal plate, a metal sheet, a metal foil, or metal grid, a plastic material, a fiber reinforced plastic material, a glass fiber or carbon fiber reinforced material, aluminum, steel.

Another aspect of the invention relates to a clip on balancing weight comprising a section of such a strand of polymer material. such balancing weights may be manufactured with a precise weight according to the actual requirements, by cutting a piece of the strand.

### Description of Drawings

In the following the invention will be described by way of example, without limitation of the general inventive concept, on examples of embodiment with reference to the drawings.
Fig. 1 shows chained clip-on balancing weights.
Fig. 2 shows the clip-on balancing weights in a side view.
Fig. 3 shows chained clip-on balancing weights supported by a tape layer.
Fig. 4 shows chained small clip-on balancing weights supported by a tape layers in a side view.
Fig. 5 shows discrete clip-on balancing weights supported by a tape layer.
Fig. 6 shows the discrete clip-on balancing weights in a side view.
Fig. 7 shows a clip-on balancing weight strand.
Fig. 8 shows a clip-on balancing weight strand in a side view.
Fig. 9 shows a flexible balancing weight strand.
Fig. 10 shows a flexible balancing weight strand in a side view.
Fig. 11 shows a detail of a balancing weight tape layer.
Fig. 12 shows a different set of layers in detail.
Fig. 13 shows parts of the layers.
Fig. 14 shows a sectional view of the clip lock.
Fig. 15 shows a sectional view of the clip lock, supported by tape layers.
Fig. 16 shows a spring clip.
Fig. 17 shows a balancing weight attached to a rim.
Fig. 18 shows a reel with a belt of balancing weights.
Fig. 19 shows balancing weights held by a support tape in a top view.
Fig. 20 shows balancing weights held by a support tape in a side view.
Fig. 21 shows trapezoidal cross-section balancing weights in a top view.
Fig. 22 shows trapezoidal cross-section balancing weights in a side view.
Fig. 23 shows interconnected trapezoidal cross-section balancing weights in a top view.
Fig. 24 shows interconnected trapezoidal cross-section balancing weights in a side view.

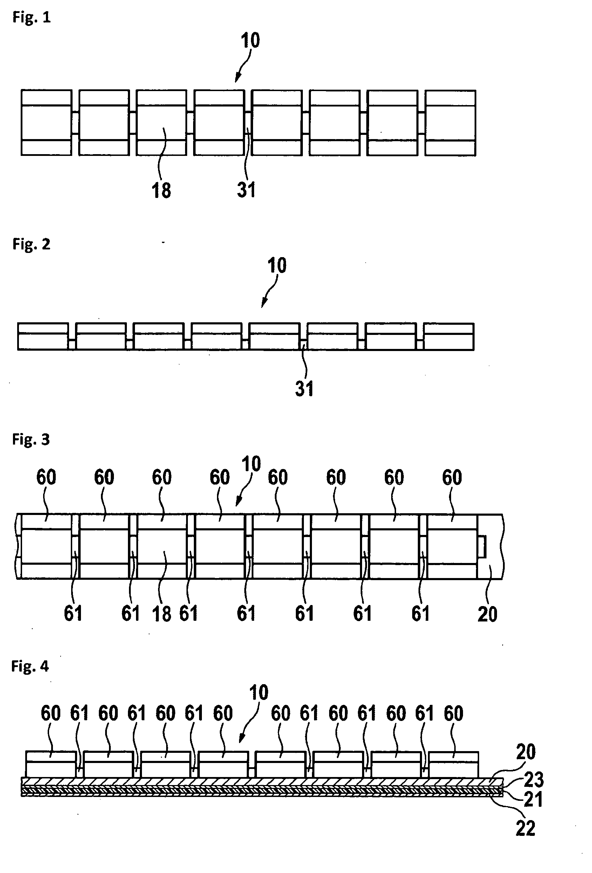

In Fig. 1 a clip on balancing weight 10 is shown. A plurality of balancing weight elements 60 are forming a chain or a string of balancing weights. For clarity reasons, the numbers 60 are shown in the next figures only. The balancing weight elements preferably have the shape of a clip lock 18. this allows to push a clip over the elements to attach the balancing weight to a rim. The elements are interlinked by link elements 61 or any other link, preferably of the same material as the balancing weight elements or a coating thereof. Preferably, such a link element is a bar connecting neighbored weight elements. It may be preferred to have two or more bars in parallel for improving mechanical strength. Preferably, the link elements are close to the sides of the rim to allow easy bending of the balancing weights to adapt to the radius of the rim. Individual balancing weight elements or a plurality of balancing weight elements may be separated from a string of balancing weights to form a total mass as required for specific balancing task. For example, the weight of a single balancing weight element may be 10 g. If for a balancing task 40 g are required, a section containing four elements may be cut off the string of balancing weights.

In Fig. 2 the previous balancing weights are shown in a side view.

In Fig. 3 another embodiment of the balancing weights is shown in a top view. The balancing weights may be supported by at least one tape layer. Here only top tape layer 20 can be seen. The other tape layers are hidden below this top tape layer 20. There may be further tape layers. The tape layers may enhance stability and interconnect a plurality of balancing weight elements. Furthermore, the tape layers may provide an adhesive for fixing the balancing weights by adhesive force to the rim.

Figure 4 shows the previous balancing weights in a side view. Here again, the balancing weights are supported by a top tape layer 20. There may be further layers like, support layer 23, bottom tape layer 21 and liner 22. The balancing weights 10 are on top of a first top tape layer 20. It is preferred, if there is at least one support layer 23 below the top tape layer 20. Preferably, the support layer is of a comparatively stiff material. The support layer may be of metal or plastic material, preferably it comprises of a fiber reinforced plastic material, most preferably of carbon fiber or glass fiber reinforced plastic material. It may also comprise of a mesh or grid. It is further preferred, if there is a bottom tape layer 21 beyond the support layer 23, which may be a self-adhesive tape and allows fixing of the tape together with the balancing weights to the rim. A liner 22 may be provided to protect the self-adhesive surface of bottom tape layer 21. Generally, the support layer 23 stiffens the belt and allows handling of any section of the belt as one piece. The support layer 23 may be used alone or in conjunction with other layers. Preferably at least one comparatively soft layer is provided which may comprise a foam material to compensate for deviations of the rim surface. Furthermore any of the layers disclosed herein may have at least one adhesive coating to provide a sufficient adhesive strength to a neighboring layer, a balancing weights or the rim.

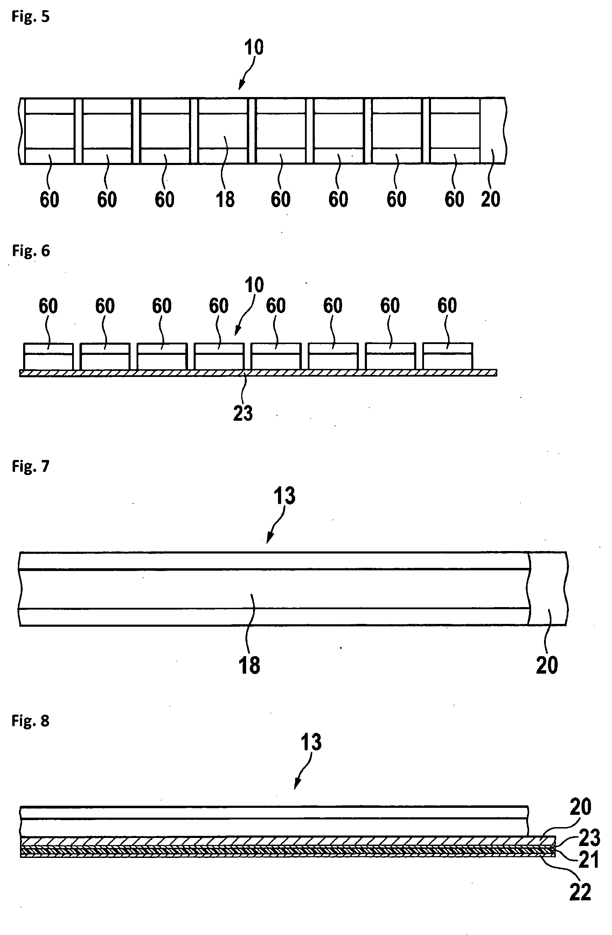

In Fig. 5 discrete clip-on balancing weights 10 are shown in top view. These balancing weights only have elements with clip lock sections 18 to interface with a clip for attaching the weights to a rim. This clip lock section is the minimum requirement for a clip on weight. By reducing clip-on weights to this minimum, the weights may be subdivided into comparatively small portions which may be 5 g or 10 g. There may be one or a plurality of layers supporting and stabilizing the balancing weights. Preferably these layers interconnect a plurality of balancing weights to allow simplified handling. Due to the stabilizing layer which may be below the top tape layer 20 shown herein, any number of balancing weights may be handled and attached to the rim as one unit.

In Fig. 6 the previous clip on balancing weights are shown in a side view. Here for example only one support layer 23 is shown. It may also possible to provide any other combination of layers like the layers shown herein in other embodiments like in figure 4.

In Fig. 7 a clip-on balancing weight strand is shown. preferably the strand comprises a polymer material with embedded mass material. The mass material may be a metal, preferably iron, zink or any other suitable material. The strand may be based on a metal polymer composite as disclosed for example in WO/2005/049714. Segments or pieces of this strand may be held by spring clip 40 to a rim. Pieces of a length corresponding to a desired weight may be cut off a preferably continuous strand and attached by using at least one spring clip 40 to a rim. This strand may easily be cut to the desired length. If, for example, the strand has a weight of 10 g per cm and a total balancing mass of 22 g is desired, a length of 2.2 cm may be cut off the strand. The strand has on its top side a clip lock structure 18 which allows interaction with the spring clip 40 to firmly hold the strand to the rim. Furthermore, there may be at least one layer 20 for supporting and/or stabilizing the strand. It is noted that such a layer is not necessary. The strand may have sufficient stability and/or stiffness to be mounted to a rim. This is specifically in the case, if the pieces of strand are comparatively short. For securely mounting long pieces of the strand to a rim, a plurality of spring clips 40 may be used. It is preferred, if at least one spring clip 40 is attached to each and of a strand.

In Fig. 8 the clip-on balancing weight strand is shown in a side view showing exemplary layers of tape.

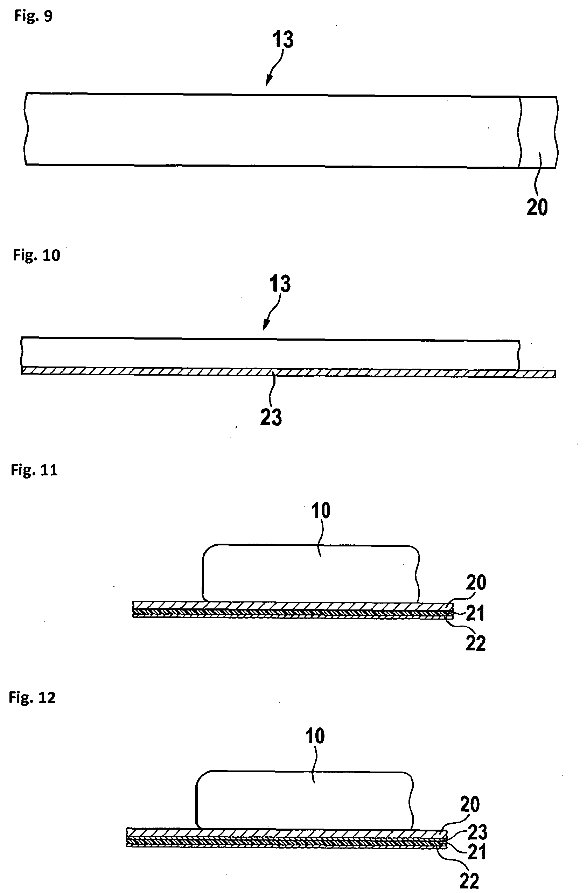

In Fig. 9 shows a not claimed example of a clip-on balancing weight strand which does not have the clip lock structure 18 at its surface. Instead, there may be a plane surface. preferably, the strand comprises at least at its surface an elastic or deformable material, which is compressed by the spring clip 40. Due to the flexible nature, the surface of the strand may adapt itself to the spring clip. It may also have adapted to the surface of the rim. Which allows balancing of a broad variety of different rims with only a single type of balancing weight strand.

In Fig. 10 the balancing weight strand is shown in a side view showing an exemplary layer of tape.

In Fig. 11, a balancing weight is shown on different tape layers. Here, the balancing weight is simplified. It may be any of the balancing weights including strands described herein. The balancing weight 10 is attached to top tape layer 20. Below this top tape layer 20 is bottom tape layer 21. This is furthermore protected by liner 22. Preferably, bottom tape layer 21 is a self-adhesive tape, while top tape layer 20 may be a comparatively stiff and inflexible tape.

In Fig. 12, a different set of layers is shown in detail. A balancing weight 10 is attached to top tape layer 20. Below this layer is support layer 23 which comprises of a comparatively stiff material. Below this layer is bottom tape layer 21, which preferably is a self-adhesive tape. This is furthermore protected by liner 22.

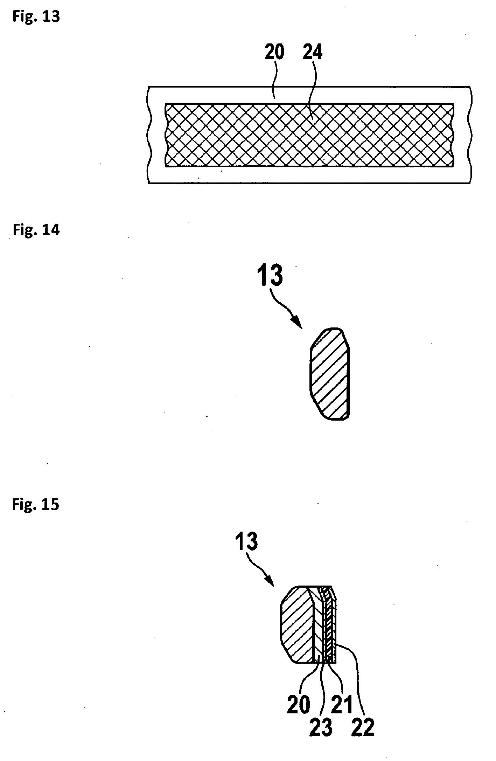

In Fig. 13, parts of the layers are shown. Here, a mesh 24 is located on the bottom side top tape layer 20. Generally, this mesh may be support layer 23. Instead of this mesh, any other material forming support layer 23 may be placed. It is preferred, if this mesh or any other material functioning as support layer does not extend to the sides of the top tape layer, but is smaller in width. This allows a protection of the mesh by the top tape layer and preferably by the bottom tape layer which is attached to the top tape layer. It is preferred, if this mesh provides additional stiffness to hold a plurality of balancing weight elements together to form a single balancing weight. For this purpose, the mesh may be a metal or metal wire mesh.

Fig. 14 shows a sectional view of an exemplary embodiment of a clip lock structure which for example corresponds to the cross section of the strands as shown in the figures 7 and 8 or the balancing weights of figures 1 to 6 . This profile generally has a cross section adapted to be held by the spring clip 40 to a rim. In this figure, the right side is oriented to the rim, while the left aside interacts with the spring. Generally, elements of embodiments as shown in figures 1 and 2 and the other embodiments may have such a cross section for attaching a spring clip.

Fig. 15 shows a sectional view as in the previous figure with added tape layers. such a tape layers may be provided for increasing mechanical stability and/or adhesion to a rim. Generally, elements of embodiments as shown in figures 3 and 4 and the other embodiments including tape layers may have such a cross section for attaching a spring clip.

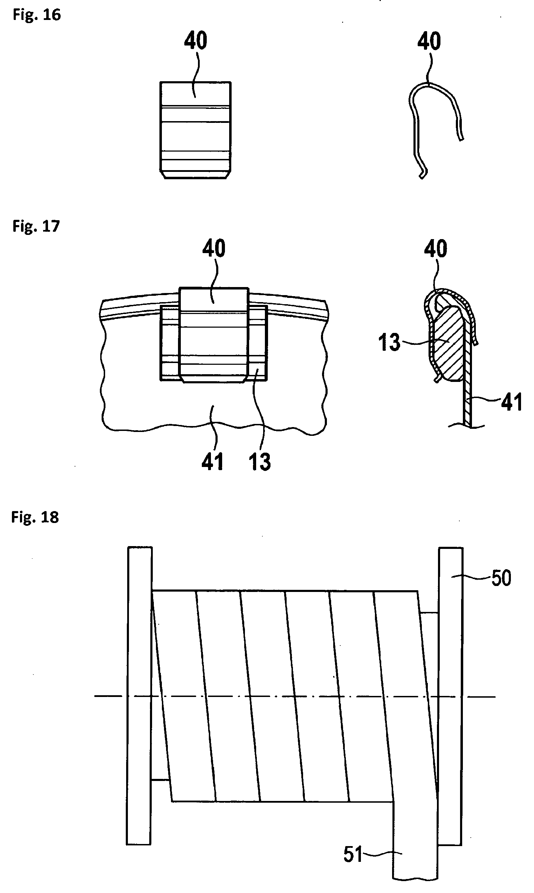

In Fig. 16 a spring clip is shown, which may be used to fix a balancing weight to a rim. On the left side the spring clip is shown in a top view, while it is shown in a side view at the right side

Fig. 17 shows an exemplary balancing weight 13 attached to a rim 41 by means of a spring clip 40. Here, the balancing weight may be any of the balancing weights or the strands as disclosed herein.

Fig. 18 shows a reel with a belt 51 of balancing weights. It is preferred, if the balancing weights are bent to a standard radius of 160 mm preferably within a tolerance of ± 20%. Preferably they are wound up on a reel 50 providing such a radius. There may even be a second or third layer of balancing weights having a smaller or larger radius if the radius is within the tolerance range. These pre-bent balancing weights can easily be applied to a rim with only minor bending.

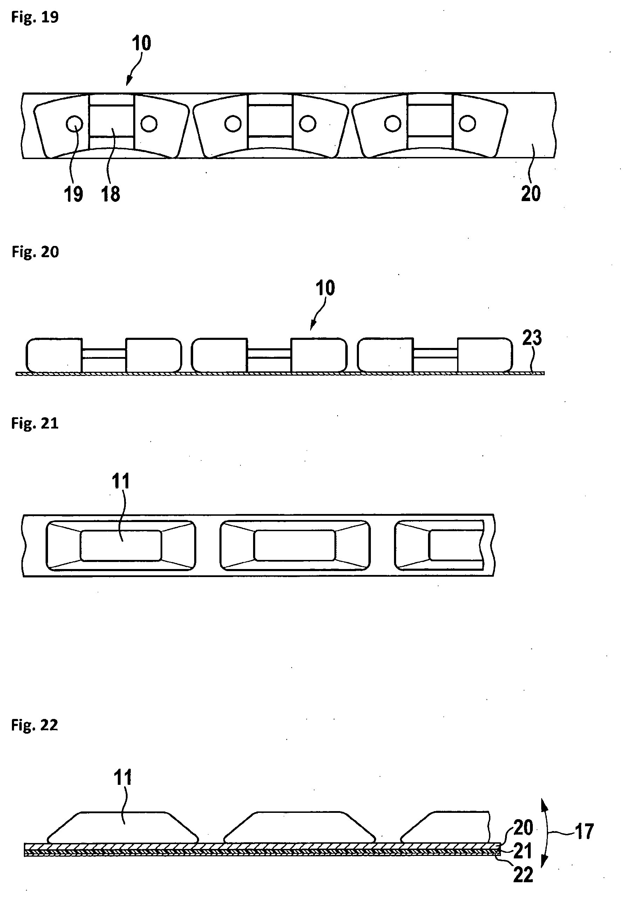

In Fig. 19, a third embodiment of balancing weights is shown. The balancing weights are similar to the balancing weights of the previous embodiment, but there is no interconnecting means at the balancing weights themselves. Instead, the balancing weights are interconnected by a support layer 23. This support layer 23 gives the belt enough stability and strength to hold the balancing weights together. Preferably, the support layer 3 is combined with at least one tape layer 20, 21 as disclosed above.

In Fig. 20, a third embodiment is shown in a side view. In this figure, there is only support layer 23 to connect the individual balancing weights 10. This support layer 23 may be connected to the balancing weights by gluing, welding, soldering, or any other method. The balancing weights may even by screwed to the support layer. In further embodiments, the support layer may be combined with at least one tape layer.

In Fig. 21, another embodiment of balancing weights 11 having a trapezoidal cross-section is shown.

In Fig. 22, the previously shown balancing weights are shown in a side view. It is preferred to combine these balancing weights with any one of the tape layers, support layers, liners, and other layers as disclosed herein. Due to the trapezoidal design, this belt has some higher degree of flexibility in bending direction 17. Generally, all the embodiments described in this document should have a certain minimum stiffness in this bending direction 17 to allow automated and simplified handling, but they can intentionally be bent by applying a force.

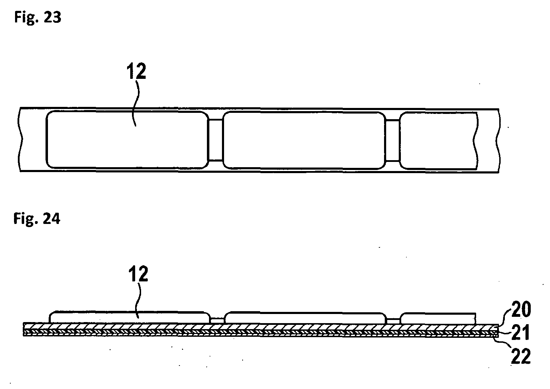

In Fig. 23, another embodiment of balancing weights is shown. Here, balancing weights 12 are comparatively flat and have fixed connecting elements in-between.

In Fig. 24, shows the previous balancing weights in a side view.

### List of reference numerals

- 10: balancing weight
- 11: trapezoidal balancing weight
- 12: flat balancing weight
- 13: balancing weight strand
- 17: bending direction
- 18: clip lock
- 19: grip hole
- 20: top tape layer
- 21: bottom tape layer
- 22: liner
- 23: support layer
- 24: mesh
- 40: spring clip
- 50: reel
- 51: balancing weights on tape
- 60: balancing weight element
- 61: link element

## Claims

1. Clip-on balancing weight (10) for vehicle wheels, comprising a plurality of balancing weight elements (60) which are interconnected by link elements (61), wherein the balancing weight elements (60) have a surface with a clip-lock structure (18) to interface with a spring clip (40) for being attached to a rim of a wheel.

2. Clip-on balancing weight (10) for vehicle wheels, comprising a plurality of balancing weight elements (60) fixedly attached to a support layer (23), wherein the balancing weight elements (60) have a surface with a clip-lock structure (18) to interface with a spring clip (40) for being attached to a rim of a wheel.

3. Clip-on balancing weight (10) for vehicle wheels comprising of a section of a strand of polymer material with embedded mass material (13) for forming clip-on balancing weights (10) for cars, the strand having a surface with a clip-lock structure (18) to interface with a spring clip (40) for being attached to a rim of a wheel.

4. Clip-on balancing weight (10) according to claim 1,
**characterized in, that**
the link elements (61) are of the same material as the balancing weight elements (60).

5. Clip-on balancing weight (10) according to claim 1 or 3,
**characterized in, that**
the strand is fixedly attached to a support layer (23).

6. Clip-on balancing weight (10) according to claim 2 or 5,
**characterized in, that**
the support layer (23) comprises of a metal plate, a metal sheet, metal foil, or metal grid.

7. Clip-on balancing weight (10) according to claim 2 or 5,
**characterized in, that**
the support layer (23) comprises at least one of a plastic material, a fiber reinforced plastic material, a glass fiber or carbon fiber reinforced material, aluminum, steel.

8. Strand of polymer material with embedded mass material (13) for forming clip-on balancing weights (10) for cars, the strand having a surface with a clip-lock structure (18) to interface with a spring clip (40) for being attached to a rim of a wheel.

9. Strand of polymer material (13), according to claim 8,
**characterized in, that**
the strand is fixedly attached to a support layer (23).

10. Strand of polymer material (13), according to claim 8 or 9,
**characterized in, that**
the support layer (23) comprises of a metal plate, a metal sheet, metal foil, or metal grid.

11. Strand of polymer material (13), according to claim 8 or 9,
**characterized in, that**
the support layer (23) comprises at least one of a plastic material, a fiber reinforced plastic material, a glass fiber or carbon fiber reinforced material, aluminum, steel.

## Patentansprüche

1. Aufschlag-Auswuchtgewicht (10) für Fahrzeugräder, umfassend eine Vielzahl von Auswuchtgewichtelementen (60), welche durch Verbindungselemente (61) miteinander verbunden sind, wobei die Auswuchtgewichtelemente (60) eine Oberfläche mit einer Clip-Verriegelungsstruktur (18) aufweisen, zur Verbindung mit einer Federklammer (40), um an einer Felge eines Rades angebracht zu werden.

2. Aufschlag-Auswuchtgewicht (10) für Fahrzeugräder, umfassend eine Vielzahl von Auswuchtgewichtelementen (60), welche fest an einer Trägerschicht (23) angebracht sind, wobei die Auswuchtgewichtelemente (60) eine Oberfläche mit einer Clip-Verriegelungsstruktur (18) haben, zur Verbindung mit einer Federklammer (40), um an einer Felge eines Rades angebracht zu werden.

3. Aufschlag-Auswuchtgewicht (10) für Fahrzeugräder, umfassend einen Abschnitt eines Stranges aus Polymermaterial mit einem eingebetteten Massematerial (13) zum Bilden von Aufschlag-Auswuchtgewichten (10) für Autos, wobei der Strang eine Oberfläche mit einer Clip-Verriegelungsstruktur (18) hat, zur Verbindung mit einer Federklammer (40), um an einer Felge eines Rades angebracht zu werden.

4. Aufschlag-Auswuchtgewicht (10) nach Anspruch 1,
**dadurch gekennzeichnet, dass**
die Verbindungselemente (61) aus demselben Material sind wie die Auswuchtgewichtelemente (60).

5. Aufschlag-Auswuchtgewicht (10) nach Anspruch 1 oder 3,
**dadurch gekennzeichnet, dass**
der Strang fest an einer Trägerschicht (23) angebracht ist.

6. Aufschlag-Auswuchtgewicht (10) nach Anspruch 2 oder 5,
**dadurch gekennzeichnet, dass**
die Trägerschicht (23) eine Metallplatte, ein Metallblech, eine Metallfolie oder ein Metallgitter umfasst.

7. Aufschlag-Auswuchtgewicht (10) nach Anspruch 2 oder 5,
**dadurch gekennzeichnet, dass**
die Trägerschicht (23) mindestens eines von einem Kunststoffmaterial, einem faserverstärkten Kunststoffmaterial, einem Glasfaser- oder Kohlefaser-verstärkten Material, Aluminium oder Stahl umfasst.

8. Strang aus Polymermaterial mit eingebettetem Massematerial (13) zum Bilden von Aufschlag-Auswuchtgewichten (10) für Autos, wobei der Strang eine Oberfläche mit einer Clip-Verriegelungsstruktur (18) aufweist, zur Verbindung mit einer Federklammer (40), um an einer Felge eines Rades angebracht zu werden.

9. Strang aus Polymermaterial (13) gemäß Anspruch 8,
**dadurch gekennzeichnet, dass**
der Strang fest an einer Trägerschicht (23) angebracht ist.

10. Strang aus Polymermaterial (13) gemäß Anspruch 8 oder 9,
**dadurch gekennzeichnet, dass**
die Trägerschicht (23) eine Metallplatte, ein Metallblech, eine Metallfolie, oder ein Metallgitter umfasst.

11. Strang aus Polymermaterial (13) gemäß Anspruch 8 oder 9,
**dadurch gekennzeichnet, dass**
die Trägerschicht (23) mindestens eines von einem Kunststoffmaterial, einem faserverstärkten Kunststoffmaterial, einem Glasfaser- oder Kohlefaser-verstärkten Material, Aluminium oder Stahl umfasst.

## Revendications

1. Une masse d'équilibrage à pince (10) pour les roues de véhicule, comprenant une pluralité d'éléments de masse d'équilibrage (60) qui sont interconnectés par des éléments de lien (61), où les éléments de masse d'équilibrage (60) ont une surface avec une structure de fermeture par clip (18) pour faire interface avec une pince à ressort (40) pouvant être fixée à une jante d'une roue.

2. Une masse d'équilibrage à pince (10) pour les roues de véhicule, comprenant une pluralité d'éléments de masse d'équilibrage (60) attachée de façon fixe à une couche de support (23), où le éléments de masse d'équilibrage (60) ont une surface avec une structure de fermeture par clip (18) pour faire interface avec une pince à ressort (40) pouvant être fixée à une jante d'une roue.

3. Une masse d'équilibrage à pince (10) pour les roues de véhicule, comprenant une section d'un fil en matière polymère avec un matériau de masse encastré (13) pour former des masses d'équilibrage à pince (10) pour les voitures, le fil ayant une surface avec une structure de fermeture par clip (18) pour faire interface avec une pince à ressort (40) pouvant être fixée à une jante d'une roue.

4. Une masse d'équilibrage à pince (10) selon la revendication 1,
**caractérisée en ce que**
les éléments de lien (61) sont du même matériau que les éléments de masse d'équilibrage (60).

5. Une masse d'équilibrage à pince (10) selon la revendication 1 ou 3,
**caractérisée en ce que**
le fil est attaché de façon fixe à une couche de support (23).

6. Une masse d'équilibrage à pince (10) selon la revendication 2 ou 5,
**caractérisée en ce que**
la couche de support (23) comprend une plaque en métal, une tôle en métal, une feuille en métal, ou une grille en métal.

7. Une masse d'équilibrage à pince (10) selon la revendication 2 ou 5,
**caractérisée en ce que**
la couche de support (23) comprend au moins une en matière plastique, en matière plastique renforcée par fibre, en matériau renforcé par fibre de verre ou fibre de carbone, en aluminium, en acier.

8. Un fil en matière polymère avec un matériau de masse encastré (13) pour former des masses d'équilibrage à pince (10) pour les voitures, le fil ayant une surface avec une structure de fermeture par clip (18) pour faire interface avec une pince à ressort (40) pouvant être fixée à une jante d'une roue.

9. Fil en matière polymère (13), selon la revendication 8,
**caractérisé en ce que**
le fil est attaché de façon fixe à une couche de support (23).

10. Fil en matière polymère (13), selon la revendication 8 ou 9,
**caractérisé en ce que**
la couche de support (23) comprend une plaque en métal, une tôle en métal, une feuille en métal ou une grille en métal.

11. Fil en matière polymère (13), selon la revendication 8 ou 9,
**caractérisé en ce que**
la couche de support (23) comprend au moins une en matière plastique, en matière plastique renforcée par fibre, en matériau renforcé par fibre de verre ou fibre de carbone, en aluminium, en acier.
